# EUROPÄISCHE PATENTSCHRIFT

(11) **EP 1 239 175 B1**
(45) Veröffentlichungstag und Bekanntmachung des Hinweises auf die Patenterteilung: **28.04.2004**
(21) Anmeldenummer: 02003418.7
(22) Anmeldetag: 14.02.2002
(51) Int. Cl.: F16D 23/04, F16D 23/06

(54) **Schaltkupplung mit einer Synchronisiereinrichtung**
Clutch with a synchromesh
Embrayage avec un dispositif de synchronisation

(30) Priorität: 10.03.2001 DE 10111601
(43) Veröffentlichungstag der Anmeldung: 11.09.2002
(73) Patentinhaber: INA- Schaeffler KG, 91074 Herzogenaurach (DE)
(72) Erfinder: Schwuger, Josef, 91315 Höchstadt (DE); Röckelein, Ernst, 96138 Burgebrach (DE); Martin, Reiner, 96178 Pommersfelden (DE)

(56) Entgegenhaltungen:
- US-A- 2 022 095
- US-A- 2 048 883
- US-A- 2 515 010
- US-A- 3 228 499

## Beschreibung

### Gebiet der Erfindung

Die Erfindung betrifft eine Schaltkupplung mit einer Synchronisiereinrichtung zumindest bestehend aus wenigstens einem auf einer Getriebewelle angeordneten Gangrad und bestehend aus einer verdrehfest zu der Getriebewelle angeordneten sowie bei einem Schaltvorgang axial zu der Getriebewelle verschiebbaren Schaltmuffe mit einer Kupplungsverzahnung sowie die Schaltkupplung weiterhin bestehend aus wenigstens einem der Getriebewelle verdrehfest zugeordneten Reibring, wobei das Gangrad über eine Gegenverzahnung zu der Kupplungsverzahnung drehfest mit der Getriebewelle verbindbar ist und der Reibring bei einem Schaltvorgang zumindest zeitweise eine Reibpaarung mit einer wenigstens verdrehfest mit dem Gangrad gekoppelten Reibfläche bildet.

### Hintergrund der Erfindung

Eine derartige Schaltkupplung sitzt auf einer Getriebewelle und weist eine Schaltmuffe auf. Die Schaltmuffe ist axial verschiebbar aber verdrehfest zur Getriebewelle auf einem Schaltmuffenträger oder einem Wellenabsatz angeordnet. An einer nach innen gerichteten Mantelfläche der Schaltmuffe ist einseitig oder sind beidseitig Kupplungsverzahnungen ausgebildet. Es sind auch andere Anwendungen bekannt, bei denen die Kupplungsverzahnung an der Schaltmuffe radial nach außen gerichtet oder stimseitig ausgebildet ist. In Längsrichtung gesehen links und rechts des Schaltmuffenträgers bzw. Wellenabsatzes sind Gangräder auf der Getriebewelle angeordnet. Jedem Gangrad ist im Wirkbereich der Schaltmuffe eine Gegenverzahnung zur Kupplungsverzahnung zugeordnet. Es ist eine weitere Paarung von ineinander greifenden Zähnen oder anderer Profile an der Getriebewelle und dem Schaltmuffenträger und/oder der Schaltmuffe vorgesehen. Mittels dieser Paarungen ist jeweils eines der Gangräder mit der Getriebewelle über die Schaltmuffe verbindbar.

Vor dem Verbinden der Getriebewelle mit einem der Gangräder sind die Drehzahlen der Getriebewelle des zu schaltenden Gangrades aneinander anzugleichen. Zwischen die Schaltmuffe und das jeweilige Gangrad ist dafür eine Paarung von Reibflächen einer Synchronisiereinrichtung geschaltet. Um die Drehzahlen des Gangrades und der Getriebewelle aneinander anzupassen, muss die eine Reibfläche dem Gangrad und die andere Reibfläche der Getriebewelle verdrehfest zugeordnet sein. Eine der Reibflächen wird auf die andere geschoben. Beim Aufeinander treffen der Reibflächen gleichen sich die Drehzahlen der Getriebewelle und des Gangrades dann durch die Reibwirkung aneinander an. Sie bremsen sich sozusagen aneinander ab. Der Schaltmuffe und dem Gangrad sind dazu jeweils eine oder mehrere Reibflächen verdrehfest zugeordnet. Diese Reibflächen sind für einen Reibkontakt zumeist konisch ausgebildet. Die dem Gangrad zugeordnete und mit diesem gekoppelte Reibfläche ist in der Regel an einem ersten Reibring oder einem Zwischenring bzw. direkt am Gangrad oder einem Kupplungskörper ausgebildet. Bei Verwendung eines Reibringes, Zwischenringes oder eines Kupplungskörpers für eine Reibfläche sind diese mittels Formschluss mit dem Gangrad verdrehfest verbunden oder an diesem befestigt. Die der Schaltmuffe zugeordnete Reibfläche ist an einem zweiten Reibring ausgebildet, der formschlüssig verdrehfest mit der Schaltmuffe oder dem Schaltmuffenträger verbunden ist. Da die Schaltmuffe, direkt oder durch Zwischenschaltung des Schaltmuffenträgers, sowie der Schaltmuffenträger verdrehfest auf der Getriebewelle sitzen, ist auch der zweite Reibring verdrehfest mit der Getriebewelle verbunden. Eine Reibpaarung und Synchronisation der Drehzahlen zwischen den Reibflächen der Reibringe entsteht durch axiales Verschieben des zweiten Reibringes mittels der Schaltmuffe gegen den ersten Reibring am Gangrad. Nach dem Synchronisieren ist durch weiteres axiales Verschieben der Schaltmuffe das jeweilige Gangrad mit der Getriebewelle über die anfangs erwähnten Verzahnungen gekoppelt.

Soll die Wirkung der Synchronisiereinrichtung mittels doppelter oder dreifacher Reibpaarungen verstärkt werden, sind in der Regel mindestens zwei Reibpaarungen zumeist an dem Zwischenring vorgesehen. Bei diesen Mehrfachsynchronisierungen weist der Zwischenring zwei konische Reibflächen auf und ist z. B. dem Gangrad zugeordnet. Zwei der Getriebewelle verdrehfest zugeordnete Reibringe wirken dann auf diesen Zwischenring. Dazu weist jeder dieser Ringe eine Reibfläche auf, die jeweils einer Reibfläche des Zwischenringes zugeordnet ist. Der zweite Reibring ist an dem Schaltmuffenträger axial verschiebbar aber verdrehfest gehalten. Derartige Anordnungen sind aufwändig ausgeführt, da ein zweiter der Getriebewelle verdrehfest zugeordneter Reibring geführt und gehalten werden muss. Weiterhin müssen seine axialen Wege beim Auskuppeln unter Umständen begrenzt werden. Hierzu sind Anschläge vorgesehen oder diese Bewegung ist durch die Bewegung des Schaltmuffenträgers begrenzt. Der Aufbau dieser Anordnungen ist insbesondere für Anwendungen, bei denen die Schaltmuffe direkt ohne Zwischenschaltung des Schaltmuffenträgers axial verschiebbar auf der Getriebewelle sitzt, schwer zu realisieren. Deshalb sitzt in der Praxis bei Mehrfachsynchronisierungen die Schaltmuffe zumeist auf einem Schaltmuffenträger. Der Schaltmuffenträger ist dann Sitz, Führung und Anschlag für die Schaltmuffe und für die Reibringe.

Das Dokument US-A-2,022,095 zeigt Eine Schaltkupplung, die einen scheibenartig geformten Blechkörper aufweist, welcher drehstarr und lagefixiert mit der Getriebewelle verbunden ist und der mittels eines separaten Reib beiags einen Reibring bildet. Der mittels einer Verschraubung lösbar an dem Blechkörper befestigte Reibbelag weist innenseitig eine konische Reibfläche auf, die mit einer ebenfalls konischen Reibfläche des Gangrades korrespondiert. Der bekannte Schaltungsaufbau bildet weiterhin eine axial auf der Getriebewelle verschiebbare Schaltmuffe, deren Außenverzahnung mit einer Innenverzahnung des Gangrades zusammenwirkt.

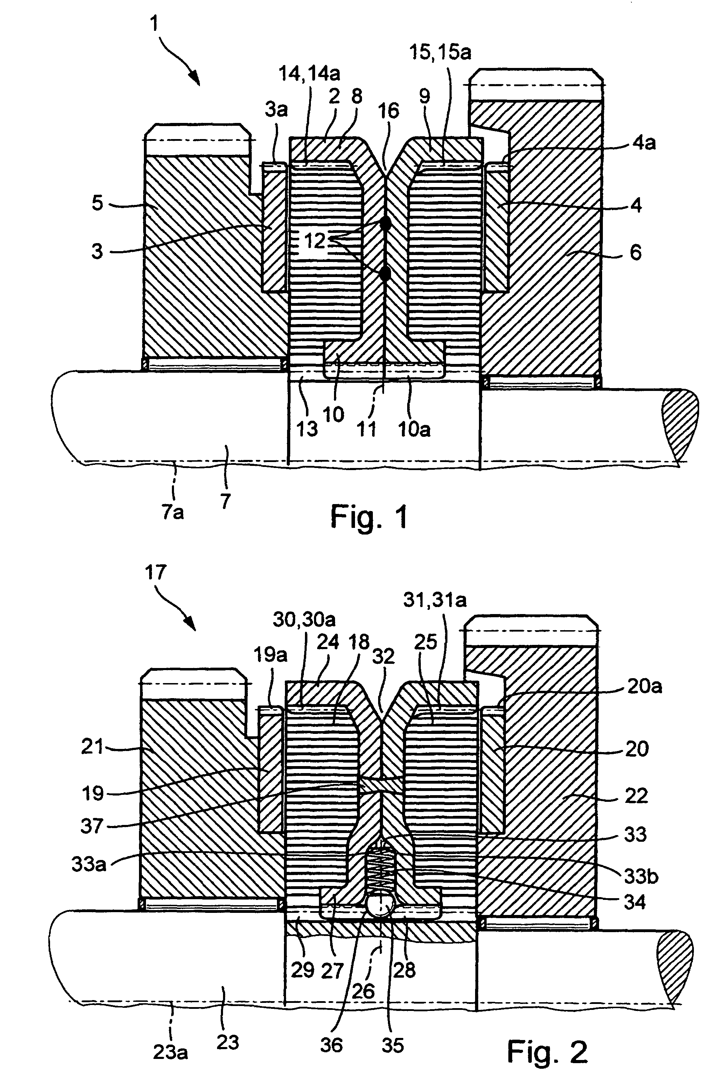

Das Dokument DD-A 204 133 offenbart eine auf einer Getriebewelle angeord nete Schaltkupplung, die eine Schaltmuffe aufweist. Die Schaltmuffe ist axial verschiebbar aber verdrehfest zur Getriebewelle auf einem Schaltmuffenträger (Figur 1) oder einem Wellenabsatz (Figur 2) angeordnet. An nach innen gerichteten Mantelflächen beidseitig der Schaltmuffe sind Kupplungsverzahnungen ausgebildet. In Längsrichtung links und rechts des Schaltmuffenträgers bzw. Wellenabsatzes sind Gangräder auf der Getriebewelle angeordnet. Jedem Gangrad ist im Wirkbereich der Schaltmuffe eine Gegenverzahnung zur Kupplungsverzahnung zugeordnet. Die Gegenverzahnung ist in Figur 1 an dem einen Gangrad an einem Kupplungskörper ausgebildet. An dem anderen Gangrad ist die Gegenverzahnung direkt aus dem Material des Gangrades ausgearbeitet. Es sind weitere Paarungen von ineinandergreifenden Zähnen zwischen der Getriebewelle sowie dem Schaltmuffenträger und der Schaltmuffe vorgesehen (Figur 1). Mittels dieser Paarungen ist jeweils eines der Gangräder mit der Getriebewelle über die Schaltmuffe verbindbar. Nach Figur 2 ist die Kupplungsverzahnung gleichzeitig die Verzahnung für den Wellensitz der direkt auf der Getriebewelle sitzenden Schaltmuffe. Die Gegenverzahnung zur Kupplungsverzahnung ist direkt jeweils aus dem Material eines Absatzes der Gangräder abgearbeitet. Die mit dem Gangrad gekoppelte konisch ausgebildete Reibfläche ist in der beschriebenen Anwendung in beiden Fällen (Bild 1 und Bild 2) an einem ersten Reibring ausgebildet. Der erste Reibring ist mittels Formschluss mit einem Absatz des Gangrades verdrehfest verbunden. Die der Schaltmuffe zugeordnete Reibfläche ist an einem zweiten Reibring ausgebildet. Der zweite Reibring ist entweder formschlüssig verdrehfest mit dem Schaltmuffenträger (Bild 1) oder der Schaltmuffe (Bild 2) verbunden.

### Zusammenfassung der Erfindung

Die Aufgabe der Erfindung ist es, eine Schaltkupplung zu schaffen, deren Aufbau einfach ist, die möglichst wenig Teile enthält und bei deren Herstellung der Aufwand an kostenintensiver spanabhebender Bearbeitung der Schaltmuffe und/oder des Schaltmuffenträgers reduziert ist.

Diese Aufgabe ist nach dem kennzeichnenden Teil des Anspruchs 1 dadurch gelöst, dass der Reibring verdrehfest zur Getriebewelle angeordnet direkt auf der Getriebewelle sitzt. Eine derartig ausgebildete Schaltkupplung ist einfacher herzustellen, da die Schaltmuffe und/oder der Schaltmuffenträger einfacher ausgeführt sind. Bearbeitungsschritte, insbesondere spanabhebende, für das Einbringen der Sitze, für den Reibring oder die Reibringe entfallen. Die Erfindung ist besonders für Anwendungen geeignet, bei denen die Schaltmuffe direkt ohne Zwischenschaltung eines Schaltmuffenträgers axial verschiebbar auf der Getriebewelle sitzt. Die sonst üblichen und für die Funktion der Schaltkupplung bzw. der Synchronisation notwendigen Anschläge und Führungen für den/die Reibringe und die Schaltmuffe an dem Schaltmuffenträger entfallen in einer Schaltkupplung gemäß Erfindung und sind durch geeignete Mittel an der Getriebewelle ersetzt. Die kostengünstigen Schaltkupplungen, bei denen die Schaltmuffen direkt auf der Getriebewelle sitzen sind jetzt somit häufiger in der Praxis, auch bei Schaltkupplungen mit Mehrfachsynchronisierungen, anwendbar.

Die Reibringe sind nach einer Ausgestaltung der Erfindung bevorzugt als Reibringe aus Blech geformt und weisen in ihrem Querschnitt betrachtet die Form eines Napfes mit einem bodenseitig eingebrachten axialen Durchbruch auf. Von dem Rand des Durchbruches gehen radial nach innen hervorstehende Vorsprünge aus, die in axial verlaufenden Nuten der Getriebewelle eingreifen. Die Nuten in der Getriebewelle sind vorzugsweise die Nuten beispielsweise eines Keilprofiles oder einer Verzahnung, die für die formschlüssige verdrehfeste Verbindung zwischen der Schaltmuffe oder dem Schaltmuffenträger an der Getriebewelle ausgebildet sind.

Der Reibring ist vorzugsweise ein flacher im Wesentlichen rotationssymmetrisch ausgebildeter Napf und weist die ansonsten bekannten Merkmale, wie die konische Ausbildung seines Mantels oder seiner Reibflächen, eine Reibbeschichtung, Ölnuten und weiteres auf. Die anfangs erwähnten Vorsprünge sind bevorzugt von dem Rand des Durchbruches abgehende und beim Stanzen des Loches in den Reibring entstandene Lappen. Wenigstens zwei, besser jedoch drei oder mehr Lappen sind möglichst gleichmäßig am Umfang des Loches verteilt angeordnet. Mit den Vorsprüngen bzw. Lappen sitzt der Reibring entweder verdrehfest oder funktionsbedingt nur um ein paar Winkelgrade schwenkbar, aber im Wesentlichen verdrehfest, auf der Getriebewelle. Der äußere Synchronring muß sich nach dem Sperrvorgang durch leichtes Schwenken um seine Mittelachse so ausrichten, daß die Kupplungsverzahnung die Sperrverzahnung des äußeren Synchronringes durchfahren kann.

Mit weiteren Ausgestaltungen der Erfindung ist vorgesehen, dass der Reibring mit einer äußeren Reibfläche und in einer anderen Version mit einer inneren Reibfläche eine Reibpaarung bildet. Dieses gilt für Schaltkupplungen mit einer einfachen Synchronisation und einer Reibpaarung aber auch für Schaltkupplungen mit mehreren Reibpaarungen. In dem zuletzt genannten Fall sind die äußere und die innere Reibfläche z. B. an einem mit dem Gangrad in Eingriff stehendem Zwischenring ausgebildet. Die mit diesem Zwischenring in Kontakt stehenden Reibringe sind dann der innere und der äußere Reibring. Diese Ringe werden in der Praxis häufig auch innerer oder äußerer Synchronring genannt. Der Weg von axial verschiebbaren Reibringen ist beispielsweise durch Wellenabsätze, Haltemittel wie Sicherungsringe und Scheiben, Klemmelemente oder sich der Anordnung anschließenden Bauelemente begrenzt. Die Reibringe stützen sich ggf. auch an diesen Elementen ab oder sind mit ihnen axial gesichert.

Die Abmessungen der Nabe der Schaltmuffe und die daran ausgebildete Verzahnung für den Eingriff in die Getriebewelle müssen den möglichen Belastungen angepasst sein, die bei der Übertragung von Drehmomenten von der Getriebewelle zu dem Gangrad oder umgekehrt im gekuppelten Zustand übertragen werden. Dabei geht es darum, ausreichend Platz für eine Verzahnung zu schaffen, die den auftretenden Belastungen Stand hält. Da der Durchmesser der Getriebewelle zumeist aus verschiedensten Gründen vorgegeben ist und auch so klein wie möglich gehalten werden soll, muss die Nabe entsprechend in Längsrichtung breit ausgebildet sein. Eine entsprechend breite Nabe ist auch erforderlich um die Schaltmuffe bzw. ihre Verzahnung ausreichend gegen Verkippen zu sichern. Außer den Abmessungen der Bauteile ist bei der konstruktiven Auslegung der Schaltkupplung zusätzlich der Weg in beide axiale Richtungen zu berücksichtigen, den die Schaltmuffe beim Kuppeln auf der Getriebewelle zurücklegt. Bei einem Sitz des Reibringes insbesondere des äußeren Reibringes direkt auf der Getriebewelle kann die Schaltkupplung unter Umständen nicht mehr auf die übliche Weise verschoben werden, da der Reibring auf der Getriebewelle der Schaltmuffe axial im Wege ist. Deshalb sieht eine Ausgestaltung der Erfindung für eine Anwendung mit einer direkt auf der Getriebewelle sitzenden Schaltmuffe vor, dass der Rand des Durchbruches radial nach außen abgehende Aussparungen aufweist und das jeder Aussparung in axialer Richtung ein axial von der Schaltmuffe abstehender sowie verdrehfest in die Getriebewelle eingreifender Abschnitt einer Nabe an der Schaltmuffe gegenübersteht, wobei der Abschnitt bei dem Schaltvorgang zumindest zeitweise axial in die Aussparung eindringt. Die Abschnitte sind bei einer zwischen zwei Gangrändem angeordneten Schaltkupplung an beiden Seiten der Nabe der Schaltmuffe ausgebildet, wenn an beiden Seiten der äußere Synchronring direkt auf der Welle sitzt. Die Indexierung des äußeren Synchronringes ist durch einen leicht um die Mittelachse schwenkbaren Sitz des Synchronringes auf der Welle mit Spiel in Umfangsrichtung gewährleistet. Sie gehen axial von einem Ringkörper der Nabe oder direkt von der Wandung der Schaltmuffe ab. Der Ringkörper oder die Wandung der Schaltmuffe weisen ebenfalls Anteile der in die Getriebewelle eingreifenden Verzahnung auf. Die Verzahnung erstreckt sich dann axial von der Wandung ausgehend in Längsrichtung in die Abschnitte. Die Anzahl, Querschnitte und die axiale Ausdehnung der Abschnitte sind anteilig nach den auftretenden Belastungen ausgelegt sowie mit dem restlichen Anteil der Verzahnung versehen. Die Anteile der Verzahnung an dem Ringkörper bzw. der Wand der Nabe bildet zusammen mit den Anteilen an den Abschnitten eine ausreichend dimensionierte Nabe mit Verzahnung. Die Aussparungen sind diesen Abmessungen so angepasst, dass die Abschnitte beim axialen Verschieben der Schaltmuffe in den Reibring axial eindringen können und auch genug Freiraum für den eventuell um wenige Winkelgrade schwenkbaren Reibring verbleibt. Die Schaltmuffe mit der Nabe fährt soweit durch den Reibring axial hindurch, bis der notwendige Weg zum Eingriff der Kupplungsverzahnung in die Gegenverzahnung am Gangrad durch die Schaltmuffe zurückgelegt ist.

Schließlich ist für die unmittelbar auf der Getriebewelle sitzende Schaltmuffe vorgesehen, dass die Schaltmuffe aus zwei schalenförmig und bodenseitig aneinander befestigten Blechformteilen gebildet ist, wobei an jedem der Blechformteile außen eine Kupplungsverzahnung und innen anteilig ein in die Getriebewelle angreifendes Keilprofil bzw. eine Verzahnung ausgebildet ist. Eine derartig ausgestaltete Schaltkupplung ist besonders kostengünstig insbesonders in der Großserien und Massenfertigung herzustellen. Die Formteile aus Blech werden durch Ziehen, Pressen und Stanzen oder ähnliche spangebende Formgebungsverfahren aus Stahlblech hergestellt. Anschließend werden sie gehärtet und unter Umständen geringfügig spanabhebend nachgearbeitet.

### Kurze Beschreibung der Zeichnungen

Die Erfindung ist nachfolgend anhand von mehreren Ausführungsbeispielen näher erläutert.

Es zeigen:
- Figur 1: Ein Ausführungsbeispiel einer Schaltkupplung mit einer zweiteiligen Schaltmuffe aus Blech, dargestellt im Längsschnitt,
- Figur 2: ein Ausführungsbeispiel einer Schaltkupplung mit einer zweiteiligen auf einer Getriebewelle arretierten Schaltmuffe aus Blech, dargestellt im Längsschnitt,
- Figur 3: ein Ausführungsbeispiel einer Schaltkupplung mit einer einfachen Synchronisierung, mit einer zweiteiligen Schaltmuffe aus Blech, mit einem verdrehfest auf der Getriebewelle sitzenden Reibring und mit Federn zwischen der Schaltmuffe und dem Reibring, dargestellt im Längsschnitt,
- Figur 4: ein Ausführungsbeispiel einer Schaltkupplung mit einer Doppel-Konus-Synchronisation, mit einer zweiteiligen Schaltmuffe aus Blech, mit einem verdrehfest auf der Getriebewelle sitzenden Reibring und Federn zwischen der Schaltmuffe und dem Reibring, dargestellt im Längsschnitt,
- Figur 5: ein Ausführungsbeispiel einer Schaltkupplung mit einer Doppelsynchronisation, mit einer zweiteiligen Schaltmuffe aus Blech, mit verdrehfest auf der Getriebewelle sitzenden Reibringen und mit Federn zwischen der Schaltmuffe und dem äußeren Reibring, dargestellt im Längsschnitt,
- Figur 6: ein Ausführungsbeispiel eines inneren Reibringes für den Sitz auf der Getriebewelle,
- Figur 7: der Reibring nach Figur 6, in der Seitenansicht sowie teilweise geschnitten,
- Figur 8: ein Ausführungsbeispiel eines äußeren Reibringes für den Sitz auf der Getriebewelle,
- Figur 9: der Reibring nach Figur 8, in der Seitenansicht sowie teilweise geschnitten,
- Figur 10: ein Ausführungsbeispiel eines äußeren Reibringes aus einer Doppelsynchronisation,
- Figur 11: den Reibring nach Figur 10, dargestellt in einem Schnitt entlang der Linie XI - XI nach Figur 10,
- Figur 12: ein weiteres Ausführungsbeispiel einer Schaltkupplung mit einer Doppelsynchronisation, mit einer zweiteiligen Schaltmuffe aus Blech, mit verdrehfest auf der Getriebewelle sitzenden Reibringen und mit federbelasteten Kugeln, wobei die Kugeln auf eine Rampe an dem äußeren Reibring wirken, dargestellt im Längsschnitt,
- Figur 13: eine vergrößerte Darstellung des Details Z aus Figur 12 in einer alternativen Ausgestaltung der Kontur der Rampe,
- Figur 14: ein Ausführungsbeispiel einer Schaltkupplung in einer Doppelsynchronisation, bei der zwischen der Schaltmuffe und dem äußeren Reibring Tellerfedern angeordnet sind, die Schaltmuffe, dargestellt in der Neutralposition zwischen den Gangrädern sowie dargestellt im Längsschnitt und
- Figur 15: die Schaltkupplung nach Figur 14, die Schaltmuffe, dargestellt in einer Position, in der ein Gang eingelegt ist, dargestellt im Längsschnitt

### Detaillierte Beschreibung der Zeichnungen

Figur 1 zeigt eine Schaltkupplung 1. Die Schaltkupplung 1 weist eine Schaltmuffe 2 sowie zwei Kupplungskörper 3 und 4 auf. Die Kupplungskörper 3 und 4 sind jeweils an einem Gangrad 5 bzw. 6 befestigt. Die Gangräder 5 und 6 sind jeweils rotierend auf einer Getriebewelle 7 gelagert. Die Schaltmuffe 2 ist zwischen den Gangrädern 5 und 6 angeordnet und aus zwei Blechformteilen 8 und 9 zusammengesetzt. Die Blechformteile 8 und 9 sind jeweils schalenförmig geformt und an einer zur Längsachse 7a der Getriebewelle 7 quer verlaufenden Teilungsebene 11 mittels Schweißverbindungen 12 stirnseitig aneinander befestigt. Jedes der Blechformteile 8 und 9 weist einen Anteil einer Nabe 10 mit radial nach innen abgehenden Keilen 10a auf. Mit den Keilen 10a greift die Schaltmuffe 2 verdrehfest sowie in beide Richtungen axial verschiebbar in längs verlaufende Nuten 13 der Getriebewelle 7 ein.

Jedes der Blechformteile 8 und 9 der Schaltmuffe 2 aus Figur 1 ist außerdem außen mit je einer Kupplungsverzahnung 14 bzw. 15 versehen. Die Kupplungsverzahnungen 14 und 15 weisen radial nach innen hervorstehende sowie längs ausgerichtete Zähne 14a bzw. 15a auf. Zu den Kupplungsverzahnungen 14 und 15 gibt es jeweils eine Gegenverzahnung 3a bzw. 4a. Die Gegenverzahnung 3a bzw. 4a ist, axial in dem Wirkbereich der jeweiligen Kupplungsverzahnung 14 und 15 liegend, mit radial nach außen weisenden Zähnen an den jeweiligen Kupplungskörper 3 oder 4 ausgebildet. Die in Richtung eines der Gangräder 5 oder 6 verschobene Schaltmuffe 2 greift mit einer der Kupplungsverzahnungen 14 oder 15 in eine der Gegenverzahnungen 3a bzw. 4a ein und verbindet somit die Getriebewelle 7 verdrehfest mit einem der Gangräder 5 oder 6.

Die Schaltmuffe 2 wird mittels einer in Figur 1 nicht dargestellten Schaltgabel axial verschoben. Die Schaltgabel greift dazu in eine radial nach außen offene Ringnut 16 ein. Die Ringnut 16 ist durch Mantelflächen der Blechformteile 8 und 9 begrenzt.

Figur 2 zeigt mit 17 ein weiteres Ausführungsbeispiel einer Schaltkupplung. Die Schaltkupplung 17 weist eine Schaltmuffe 18 sowie zwei Kupplungskörper 19 und 20 an Gangrädem 21 und 22 auf. Die Gangräder 21 und 22 sind jeweils rotierend auf einer Getriebewelle 23 gelagert. Die Schaltmuffe 18 ist zwischen den Gangrädem 21 und 22 angeordnet und aus zwei Blechformteilen 24 und 25 zusammengesetzt. Die Blechformteile 24 und 25 sind an einer zu der Längsachse 23a der Getriebewelle 23 quer verlaufenden Teilungsebene 26 mittels Nietverbindungen 37 aneinander befestigt. Jedes der Blechformteile 24 und 25 weist einen Anteil einer Nabe 27 mit radial nach innen abgehenden Keilen 28 auf. Mit den Keilen 28 greift die Schaltmuffe 18 verdrehfest sowie in beide Richtungen axial verschiebbar in entsprechende längs verlaufende Nuten 29 der Getriebewelle 23 ein.

Jedes der Blechformteile 24 und 25 der Schaltmuffe 18 aus Figur 2 ist außerdem außen mit je einer Kupplungsverzahnung 30 oder 31 versehen. Die Kupplungsverzahnungen 30 und 31 weisen radial nach innen hervorstehende sowie längs ausgerichtete Zähne 30a bzw. 31 a auf. Zu den Kupplungsverzahnungen 30 und 31 gibt es jeweils eine Gegenverzahnung 19a bzw. 20a. Die Gegenverzahnung 19a bzw. 20a ist, axial in dem Wirkbereich der jeweiligen Kupplungsverzahnung 30 und 31 liegend mit radial nach außen weisenden Zähnen an dem jeweiligen scheibenförmigen Kupplungskörper 19 oder 20 ausgebildet. Die in Richtung eines der Gangräder 21 oder 22 verschobene Schaltmuffe 18 greift mit einer der Kupplungsverzahnungen 30 bzw. 31 in eine der Gegenverzahnungen 19a oder 20a und verbindet somit die Getriebewelle 23 verdrehfest mit einem der Gangräder 21 oder 22. Eine nicht dargestellte Schaltgabel greift zum Verschieben der Schaltmuffe 18 in eine radial nach außen offene Ringnut 32 ein. Die Ringnut 32 ist durch Mantelflächen der Blechformteile 24 und 25 begrenzt.

Die Blechformteile 24 und 25 der Schaltmuffe 18 in Figur 2 schließen eine Aufnahme 33 zwischen sich ein. Die Aufnahme 33 ist durch in die Stirnseiten der Blechformteile 24 und 25 eingebrachte Ausformungen 33a bzw. 33b gebildet. In dieser Aufnahme 33 ist ein durch eine Feder 34 vorgespanntes Arretierelement 35 aufgenommen. Das Arretierelement 35 ist in diesem Fall durch eine Kugel gebildet und mittels der Feder 34 in Richtung der Getriebewelle 23 vorgespannt sowie in einer Rastausnehmung 36 in der Getriebewelle 23 verrastet. Die Schaltmuffe 18 ist mittels des Arretierelementes 35 in einer neutralen Stellung zwischen den Gangrädem 21 und 22 arretiert.

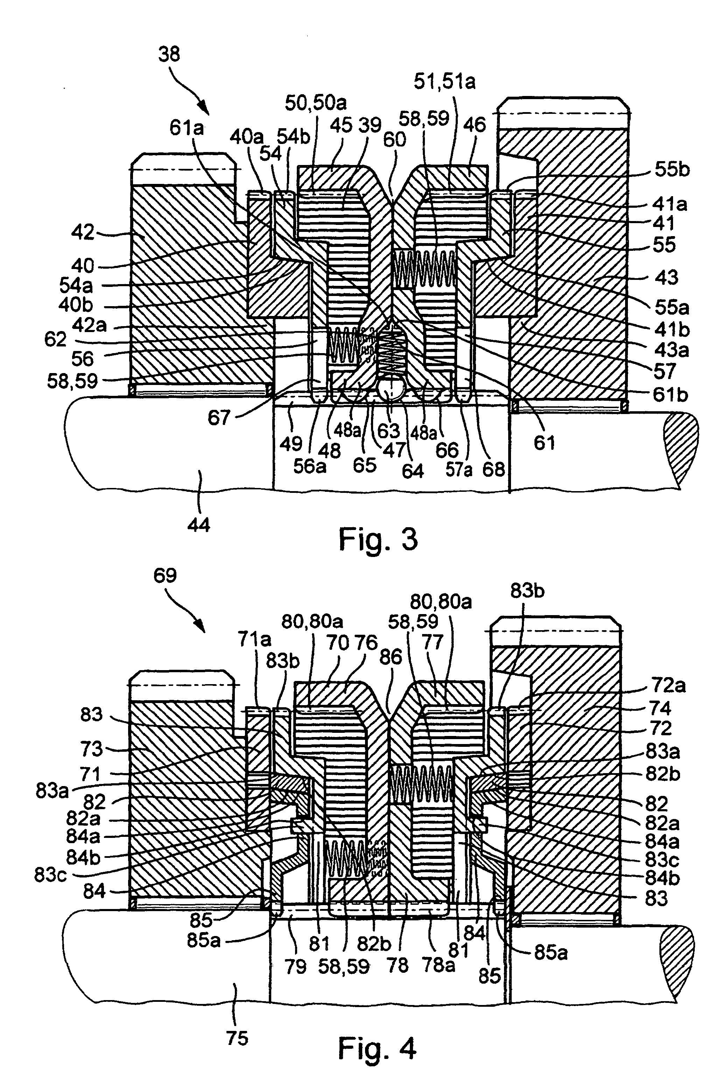

Figur 3 zeigt eine Ausführung der Erfindung, bei der eine Schaltkupplung 38 mit einer einfachen Synchronisation versehen ist. Die Schaltkupplung 38 weist eine Schaltmuffe 39 sowie zwei Kupplungskörper 40 und 41 an Gangrädem 42 bzw. 43 auf. Die Gangräder 42 und 43 sind jeweils rotierend auf einer Getriebewelle 44 gelagert. Die Schaltmuffe 39 ist zwischen den Gangrädem 42 und 43 angeordnet und aus zwei Blechformteilen 45 und 46 zusammengesetzt. Die Blechformteile 45 und 46 sind jeweils durch Ziehen geformt und miteinander verklebt. Jedes der Blechformteile 45 und 46 weist einen Anteil einer Nabe 48 mit radial nach innen abgehenden Keilen 47 auf. Mit den Keilen 47 greift die Schaltmuffe 39 verdrehfest sowie in beide Richtungen axial verschiebbar in längs verlaufenden Nuten 49 der Getriebewelle 44 ein.

Jedes der Blechformteile 45 und 46 der Schaltmuffe 39 aus Figur 3 ist außerdem außen mit je einer Kupplungsverzahnung 50 bzw. 51 versehen. Die Kupplungsverzahnungen 50 und 51 weisen Zähne 50a bzw. 51 a auf. Zu den Kupplungsverzahnungen 50, 51 gibt es jeweils eine Gegenverzahnung 40a bzw. 41 a. Die Gegenverzahnungen 40a und 41 a sind, axial in dem Wirkbereich der jeweiligen Kupplungsverzahnung 50a oder 51a liegend, mit radial nach außen weisenden Zähnen an dem jeweiligen als Zahnscheibe ausgebildeten und auf einem Absatz 42a bzw. 43a des Gangrades 42 bzw. 43 aufgepressten Kupplungskörper 40 oder 41 ausgebildet.

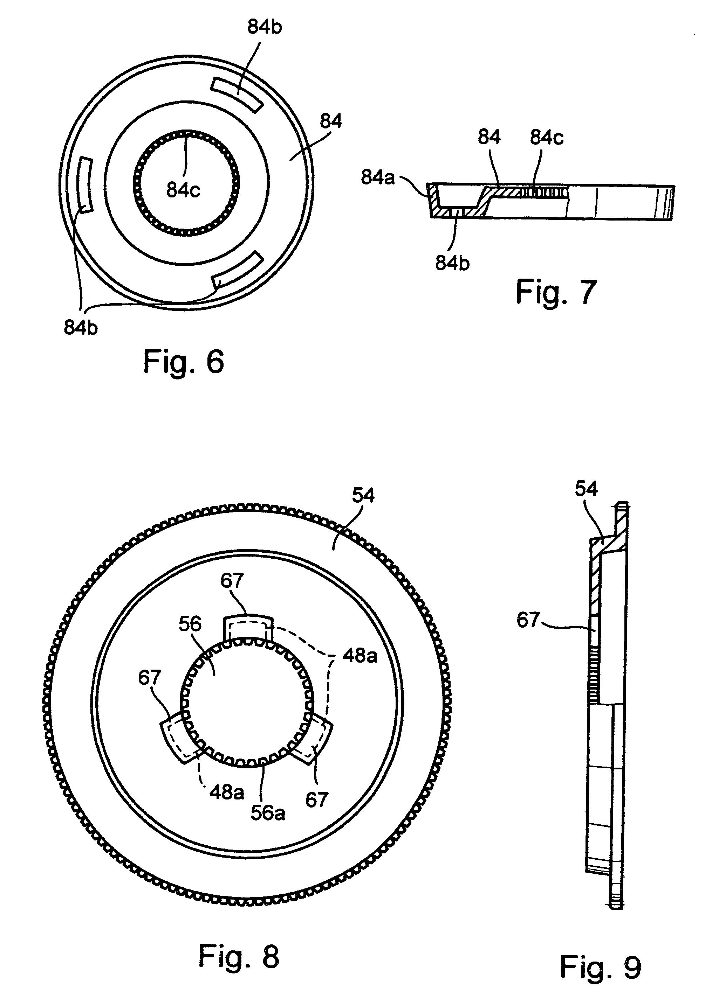

Die Kupplungskörper 40 und 41 der Schaltkupplung 38 nach Figur 3 weisen konische Reibflächen 40b bzw. 41 b an Ansätzen auf. Jede der konischen Reibflächen 40b bzw. 41b passt zu einer nach innen gerichteten konischen Reibfläche 54a oder 55a an einem Reibring 54 bzw. 55. Die Reibringe 54 und 55 sind aus Blech gefertigt, weisen in ihrem Querschnitt betrachtet die Form eines Napfes auf und sind außen mit einer Sperrverzahnung 54b bzw. 55b versehen. Einer der Reibringe 54 ist nicht maßstäblich in Figur 8 und Figur 9 dargestellt. Jeder der Reibringe 54 und 55 weist bodenseitig einen Durchbruch 56 bzw. 57 auf. Von dem Rand des Durchbruches 56 und 57 gehen radial nach innen hervorstehende Vorsprünge 56a bzw. 57a in Form von am Umfang verteilt angeordneten Zähnen hervor. Mit diesen Vorsprüngen 56a bzw. 57a greifen die Reibringe 54 bzw. 55 axial verschiebbar und um wenige Winkelgrade schwenkbar in die axial verlaufenden Nuten 49 der Getriebewelle 44 ein.

In der Schaltmuffe 39 in Figur 3 sind beidseitig Federelemente 58 aufgenommen. Die Federelemente 58 sind durch gleichmäßig am Umfang eines jeden Blechformteiles 45 bzw. 46 angeordnete Schraubenfedern 59 gebildet. Die Schraubenfedern 59 sind in Aufnahmen der Blechformteile 45, 46 gesichert.

Die nach Figur 3 in Richtung eines der Gangräder 42 oder 43 verschobene Schaltmuffe 39 überträgt die Schaltkraft zuerst auf die Schraubenfedem 59 an einer ihrer Seiten und verschiebt mit den Schraubenfedern 59 einen der Reibringe 54, 55 auf der Getriebewelle 44 axial in Richtung eines der Gangräder 42 bzw. 43. Die Schraubenfedem 59 sitzen mittels der durch die Schaltmuffe 39 übertragenden Schaltkraft vorgespannt zwischen der Schaltmuffe 39 und dem Reibring 54 bzw. 55. Der Reibring 54 oder 55 trifft mit seiner Reibfläche 54a bzw. 55a auf die Reibfläche 40b bzw. 41 b an dem Kupplungskörper 40 bzw. 41, womit der Vorgang der Synchronisation beginnt. Die Kupplungsverzahnung 50 bzw. 51 der Schaltmuffe 39 trifft auf die Sperrverzahnung 54b bzw. 55b an dem Reibring 54 oder 55 und kann erst nach Abschluss der Synchronisation durch diese hindurch verschoben werden. Dazu schwenkt der Reibring 54 innerhalb eines Schwenkbereiches leicht um seine Mittelachse auf der Getriebewelle 44, bis die Kupplungsverzahnung 50 bzw. 51 durch die Sperrverzahnung 54b und 55b hindurch geschoben werden kann. Dabei werden die Schraubenfedern 59 weiter zusammengedrückt und bleiben bis zum Rückführen der Schaltmuffe 39 in die Neutralstellung durch die Schaltkraft vorgespannt.

Der axiale Freiraum in Figur 3 für die Nabe 48 der Schaltmuffe 39 ist durch von dem Rand des Durchbruches 56 bzw. 57 radial nach außen weggehende Aussparungen 67 bzw. 68 an dem Reibring 54 bzw. 55 geschaffen. Die Nabe 48 besteht an ihren beiden Längsseiten aus hervorstehenden Abschnitten 48a, an denen anteilig die Keile 47 ausgebildet sind. Jeder der Abschnitt 48a steht einer der Aussparungen 67 bzw. 68 gegenüber und taucht in diese beim axialen Verschieben der Schaltmuffe 39 ein. In Figur 8 sind die in die Aussparung 67 eingetauchten Abschnitte 48a gestrichelt dargestellt.

Nachdem Angleichen der Drehzahlen der Getriebewelle 44 und eines der Gangräder 42, 43 greift die Schaltmuffe 39 mit einer der Kupplungsverzahnungen 50 bzw. 51 in eine der Gegenverzahnungen 40a oder 41 a ein und verbindet somit die Getriebewelle 44 verdrehfest mit einem der Gangräder 42, 43. Eine nicht dargestellte Schaltgabel überträgt während des vorstehend beschriebenen Vorganges die Schaltkraft zur Schaltmuffe 39 und greift dazu in eine radial nach außen offene Ringnut 60 ein. Die Ringnut 60 ist durch die Mantelflächen der Blechformteile 45 und 46 begrenzt.

Die Blechformteile 45 und 46 aus Stahlblech der Schaltmuffe 39 schließen eine Aufnahme 61 zwischen sich ein. Die Aufnahme 61 ist durch in die Stirnseiten der Blechformteile 45 bzw. 46 eingebrachte Ausformung 61 a und 61 b gebildet. In dieser Aufnahme 61 ist ein durch eine Feder 62 vorgespanntes Arretierelement 63 aufgenommen. Das Arretierelement 63 ist in diesem Fall durch eine Kugel gebildet und mittels der Feder 62 in Richtung der Getriebewelle 44 vorgespannt. Das Arretierelement 63 verrastet dabei in eine Rastausnehmung 64 in der Getriebewelle 44. Die Schaltmuffe 39 ist mittels des Arretierelementes 63 in einer neutralen Stellung zwischen den Gangrädem 42 und 43 arretiert dargestellt und kann aber auch mit dem Arretierelement 63 wahlweise in den Rastausnehmungen 65 bzw. 66 in einer der Schaltstellungen arretiert sein.

Figur 4 zeigt ein Ausführungsbeispiel einer Schaltkupplung 69 mit einer doppelten Synchronisation. Die Schaltkupplung 69 weist eine Schaltmuffe 70 sowie zwei scheibenförmig ausgebildete Kupplungskörper 71 und 72 an Gangrädern 73 bzw. 74 auf. Die Gangräder 73 und 74 sind jeweils rotierend auf einer Getriebewelle 75 gelagert. Die Schaltmuffe 70 ist zwischen den Gangrädem 73 und 74 angeordnet und aus zwei Blechformteilen 76 und 77 zusammengesetzt. Die Blechformteile 76 und 77 sind jeweils durch Ziehen geformt und miteinander verschweißt. Jedes der Blechformteile 76 und 77 weist einen Anteil einer Nabe 78 mit radial nach innen abgehenden Zähnen 78a auf.

Mit den Zähnen 78a greift die Schaltmuffe 70 verdrehfest sowie in beide Richtungen axial verschiebbar in längsverlaufende Nuten 79 eines Gegenzahnprofiles der Getriebewelle 75 ein.

Jedes der Blechformteile 76 und 77 der Schaltmuffe 70 aus Figur 4 ist außerdem außen mit je einer Kupplungsverzahnung 80 versehen. Die Kupplungsverzahnungen 80 weisen Zähne 80a auf. Zu den Kupplungsverzahnungen 80 gibt es jeweils eine Gegenverzahnung 71a bzw. 72a. Die Gegenverzahnung 71a bzw. 72a ist mit radial nach außen weisenden Zähnen an den Kupplungskörpem 71 bzw. 72 ausgebildet.

Die Kupplungskörper 71 und 72 der Schaltkupplung 69 nach Figur 4 sind jeweils mit einem Zwischenring 82 gekoppelt. Der Zwischenring 82 weist innen und außen eine konische Reibfläche 82a bzw. 82b auf. Jeder der inneren konischen Reibflächen 82a ist eine äußere Reibfläche 84a an einem inneren Reibring 84 zugeordnet und die äußere konische Reibfläche 82b paart sich mit einer inneren konischen Reibfläche 83a an einem äußeren Reibring 83. Die Reibringe 83 und 84 sind aus Blech gefertigt. Der äußere Reibring 83 ist außen mit einer Sperrverzahnung 83b versehen. Von dem Rand eines Durchbruches 85 des inneren Reibringes 84 gehen radial nach innen hervorstehende Vorsprünge 85a in Form von am Umfang verteilt angeordneter Zähne hervor. Der innere Reibring 84 sitzt drehfest angeordnet auf der Getriebewelle 75. Dazu greift er mit den zahnähnlich ausgebildeten Vorsprüngen 85a in die axial verlaufenden Nuten 79 der Verzahnung an der Getriebewelle 75 ein. Der äußere Reibring 83 ist axial verschiebbar in dem inneren Reibring 84 eingehängt und um wenige Winkelgrade schwenkbar insgesamt aber verdrehfest zur Getriebewelle 75 angeordnet. Dazu weist der äußere Reibring 83 axial hervorstehende Haltenasen 83c auf von denen jeweils eine in ein entsprechendes Langloch 84b des inneren Reibringes eingreift.

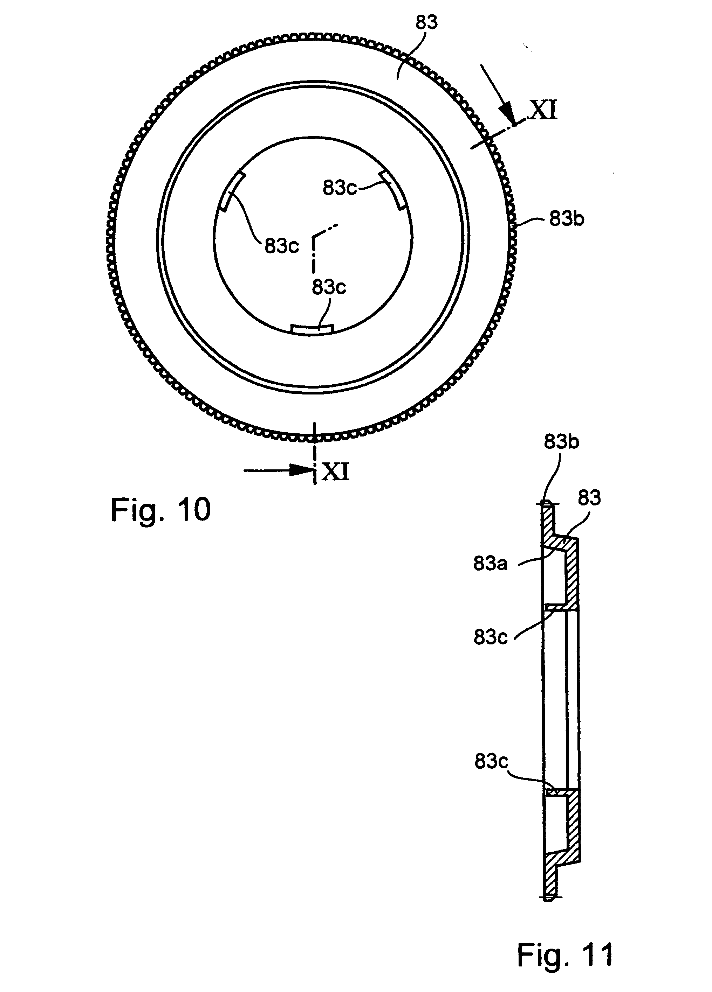

In den Figuren 10 und 11 ist der äußere Reibring 83 aus Figur 4 nicht maßstäblich dargestellt. Der äußere Reibring 83 ist ein aus Blech geformter sowie napfförmig ausgebildeter Synchronring. An dem Rand des äußeren Reibringes 83 ist die Sperrverzahnung 83b durch Stanzen und Prägen ausgebildet. Die innere Reibfläche 83a ist wahlweise aus dem Material des äußeren Reibringes und entsprechender Feinbearbeitung oder durch eine Beschichtung erzeugt. Der Boden des Napfes ist gelocht, wobei während des Herstellungsprozesse in einer Zwischenstufe nach dem Lochen wenigstens drei am Umfangs des Loches verteilt angeordnete sowie radial nach innen weisende Laschen verbleiben. Diese Laschen sind anschließend axial durchgestellt oder umgebogen und bilden die Haltenasen 83c zum Aufhängen des äußeren Reibringes 83 in dem inneren Reibring 84. Der innere Reibring 84 ist in den Figuren 6 und 7 nicht maßstäblich dargestellt. Der innere Reibring 84 aus Blech weist außer der äußeren Reibfläche 84a und einer radial nach innen weisenden Verzahnung 84c auch noch die Langlöcher 84b auf. Die innere Verzahnung 84c korrespondiert für einen verdrehfesten Sitz mit den Nuten 79 der Getriebewelle 75. Die Langlöcher 84b sind mit gleichem Radius zur Mittelachse und mit gleicher Teilung am Umfang wie die Haltenasen 83c am äußeren Reibring 83 in den inneren Reibring 84 eingebracht. Die Langlöcher 84b sind mindestens so lang, dass genügend Freiheit für die Haltenasen 83c in Umfangsrichtung verbleibt, wenn der äußere Reibring während der Synchronisation und des damit verbundenen Sperrens funktionsbedingt ein paar Winkelgrade um seine Mittelachse schwenkt.

In der Schaltmuffe 70 nach Figur 4 sind beidseitig Federelemente 58 aufgenommen. Die Federelemente 58 sind durch gleichmäßige am Umfang eines jeden Blechformteiles 75 bzw. 76 angeordnete Schraubenfedem 59 gebildet.

Die nach Figur 4 in Richtung eines der Gangräder 73 oder 74 auf der Getriebewelle 75 verschobene Schaltmuffe 70 überträgt die Schaltkraft zuerst auf die Schraubenfeder 59 an eine ihrer Seiten und verschiebt mit den Schraubenfedern 59 einen der äußeren Reibringe 83 mit seiner inneren Reibfläche 83a auf die äußere Reibfläche 82b des Zwischenringes 82. Die Schraubenfedem 59 sitzen mittels der durch die Schaltmuffe 70 übertragenen Schaltkraft vorgespannt zwischen der Schaltmuffe 70 und dem äußeren Reibring 83. Die Reibflächen 83a, 82b und 82a sowie 84a verschieben sich dabei so ineinander, dass der Bremseffekt durch die zweite Reibpaarung aus dem Zwischenring 82 und dem inneren Reibring 84 verstärkt. ist. Die Kupplungsverzahnung 80 der Schaltmuffe 70 trifft auf die Sperrverzahnung 83b an dem Reibring 83 und kann erst nach Abschluss der Synchronisation axial durch diese hindurch verschoben werden. Dabei werden die Schraubenfedern 59 weiter zusammengedrückt und bleiben bis zum Rückführen der Schaltmuffe 70 in die Neutralstellung durch die Schaltkraft vorgespannt.

Der axiale Freiraum für die Nabe 78 der Schaltmuffe 70 ist in Figur 4 durch das Loch 81 im Boden des äußeren Reibringes 83 geschaffen, in den die Nabe 78 bei axialen Bewegungen eintaucht. Nach dem Angleichen der Drehzahlen der Getriebewelle 75 und eines der Gangräder 73 bzw. 74 greift die Schaltmuffe 70 in Figur 4 mit einer der Kupplungsverzahnungen 80 in eine der Gegenverzahnungen 71 a bzw. 72a und verbindet somit die Getriebewelle 75 verdrehfest mit einem der Gangräder 73, 74. Eine nicht dargestellte Schaltgabel überträgt während des vorstehend beschriebenen Vorganges die Schaltkraft zur Schaltmuffe 70 und greift dazu in eine radial nach außen offene Ringnut 86 ein. Die Ringnut ist durch die Mantelflächen der aneinanderliegenden Blechformteile 76 und 77 begrenzt.

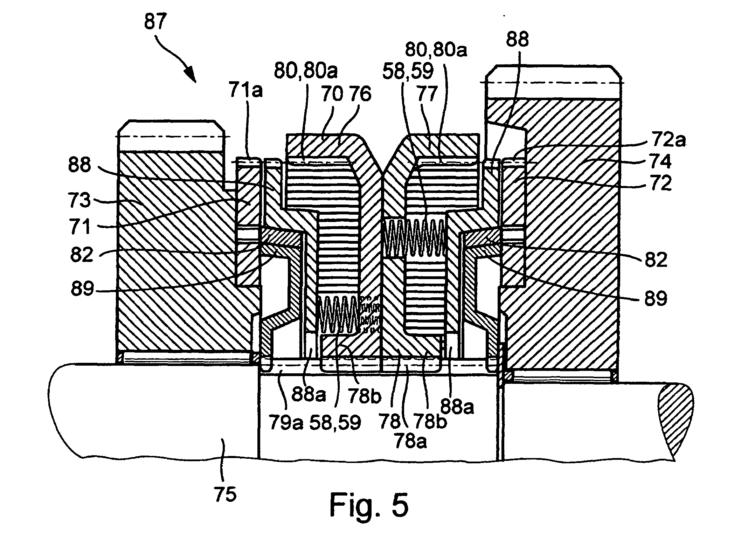

Das Ausführungsbeispiel einer Schaltkupplung 87 nach Figur 5 entspricht im Wesentlichen der Ausführung der Schaltkupplung 69 nach Figur 4. In der Schaltkupplung 69 sitzt der innere Reibring 84 direkt auf der Getriebewelle 75 und der äußere Reibring 83 ist an dem inneren Reibring 84 axial begrenzt verschiebbar aufgehängt. Dagegen sitzt in der Schaltkupplung 87 ein äußerer Reibring 88 axial verschiebbar und leicht schwenkbar direkt auf der Getriebewelle 75. Der innere Reibring 89 nach Figur 5 ist deshalb ohne Langlöcher ausgeführt. Der axiale Freiraum für die Nabe 78 ist durch von dem Rand der Verzahnung am Wellensitz radial nach außen weggehen Aussparungen 88a geschaffen. Die Nabe 78 weist wieder an ihren beiden Längsseiten hervorstehende Abschnitte 78b auf, an denen anteilig die Keile 78a der Verzahnung ausgebildet sind. Jeder der Abschnitte 78b steht einer der Aussparungen 88a gegenüber und taucht in diese beim axialen Verschieben der Schaltmuffe 70 ein. Alle weitere Teile und Funktionen der Schaltkupplungen 69 und 87 nach Figur 4 bzw. Figur 5 sind gleich.

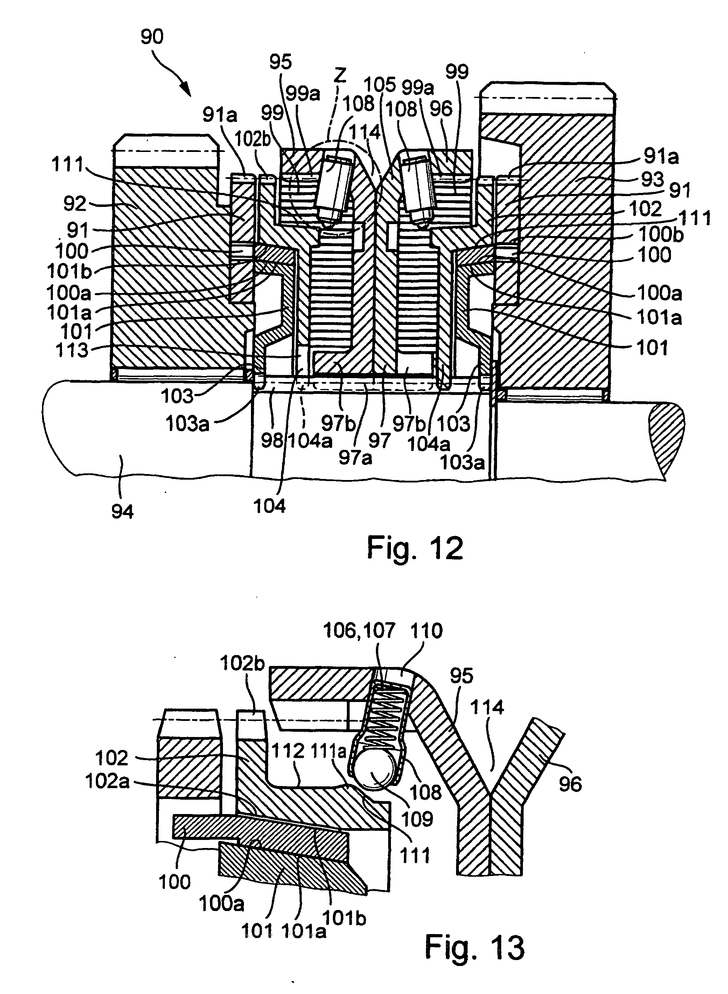

Figur 12 zeigt ein Ausführungsbeispiel einer Schaltkupplung 90 mit einer doppelten Synchronisation. Die Schaltkupplung 90 weist eine Schaltmuffe 105 sowie jeweils einen Kupplungskörper 91 an einem Gangrad 92 und 93 auf. Die Gangräder 92 und 93 sind jeweils rotierend auf einer Getriebewelle 94 gelagert. Die Schaltmuffe 105 ist zwischen den Gangrädern 92 und 93 angeordnet und aus zwei Blechformteilen 95 und 96 zusammengesetzt. Die Blechformteile 95 und 96 sind jeweils durch Ziehen geformt und auf geeignete Art, wie durch Kleben, Schweißen, Vernieten, Verstemmen oder Verschrauben aneinander befestigt. Jedes der Blechformteile 95 und 96 weist einen Anteil einer Nabe 97 mit radial nach innen abgehenden Keilen 97a auf. Mit den Keilen 97a greift die Schaltmuffe 105 verdrehfest sowie in beide Richtungen axial verschiebbar in längsverlaufende Nuten 98 eines Keilprofiles der Getriebewelle 94 ein.

Jedes der Blechformteile 95 und 96 der Schaltmuffe 105 aus Figur 12 ist außerdem außen mit je einer Kupplungsverzahnung 99 versehen. Die Kupplungsverzahnungen 99 weisen längs ausgerichtete Zähne 99a auf. Zu den Kupplungsverzahnungen 99 gibt es jeweils eine Gegenverzahnung 91 a. Die Gegenverzahnung 91 a ist an dem Kupplungskörper 91 ausgebildet.

Die Kupplungskörper 91 der Schaltkupplung 90 nach Figur 12 sind jeweils mit einem Zwischenring 100 gekoppelt. Der Zwischenring 100 weist jeweils innen und außen eine konische Reibfläche 100a bzw. 100b auf. Jeder der inneren konischen Reibflächen 100a ist eine äußere Reibfläche 101a an einem inneren Reibring 101 zugeordnet. Die äußere konische Reibfläche 100b paart sich mit einer inneren konischen Reibfläche 102a an einem äußeren Reibring 102. Die Reibringe 101 und 102 sind aus Blech gefertigt. Der äußere Reibring 102 ist außen mit einer Sperrverzahnung 102b versehen. Von dem Rand eines Durchbruches 103 des inneren Reibringes 101 gehen radial nach innen hervorstehende und als Zähne ausgebildete Vorsprünge 103a hervor. Der innere Reibring 101 sitzt verdrehfest und axial fest angeordnet auf der Getriebewelle 94. Dazu greift er mit den Vorsprüngen 103a in die axial verlaufenden Nuten 98 der Getriebewelle 94 ein. Der äußere Reibring 102 ist axial verschiebbar sowie verdrehfest zur Getriebewelle 94 angeordnet. Dazu weist der äußere Reibring 102 von einem Durchbruch 104 radial nach innen hervorstehende zahnartig ausgebildete Vorsprünge 104a auf.

In der Schaltmuffe 105 nach Figur 12 und Figur 13 sind beidseitig Federelemente 106 aufgenommen. Die Federelemente 106 sind durch Schraubenfedern 107 gebildet. Wie Figur 12 und Figur 13 zeigen, sind die Schraubenfedern 107 jeweils in einem Gehäuse 108 geführt. In dem Gehäuse 108 ist außerdem eine Kugel 109 mittels der Schraubenfeder 107 vorgespannt gehalten. Die Schaltmuffe 105 weist an jeder ihrer Seiten vorzugsweise mindestens drei derartig gelagerte Kugeln 109 auf. Die Gehäuse 108 sind in Löcher bzw. Aufnahmen 110 eingepresst. Die in Richtung eines der Gangräder 92 oder 93 auf der Getriebewelle 94 verschobene Schaltmuffe 105 überträgt die Schaltkraft zuerst über die Gehäuse 108 auf die Schraubenfedern 107 und von dort auf die Kugeln 109 an einer Seite der Schaltmuffe 105. Jede der Kugeln 109 ist für den Anlauf an einer Rampe 111 eines der äußeren Reibringe 102 vorgesehen. Die Rampe 111 weist entweder einen kontinuierlich verlaufenden Anstieg auf (Figur 12) oder endet in einer Mulde 112 (Figur 13). Die Mittelachse der Schraubenfeder 107 und damit der Vektor der Federkraft der Schraubenfeder 107 und die Mittelachse der Getriebewelle 94 schließen in diesem Beispiel einen Winkel zwischen sich ein, der von einem rechten Winkel abweicht. Die Schaltmuffe 105 verschiebt mit den Kugeln 109 den äußeren Reibring 102 mit seiner inneren Reibfläche 102a auf die äußere Reibfläche 100b des Zwischenringes 100. Dabei stützt sich jede der Kugeln 109 an jeweils einer der Schraubenfedem 107 ab.

Die Reibflächen 102a, 100b sowie 100a und 101 a in Figur 12 verschieben sich bei axialem Verschieben der Schaltmuffe 105 so ineinander, dass der Vorgang der Synchronisation durch die zweite Reibpaarung aus Zwischenring 100 und dem inneren Reibring 101 verstärkt ist. Die Kupplungsverzahnung 99 der Schaltmuffe 105 trifft auf die Sperrverzahnung 102b an dem Reibring 102 und kann erst nach dem Abschluss der Synchronisation durch diese hindurch verschoben werden. Dabei steigt jede Kugel 109 an der Rampe 111 auf und die Schraubenfedern 107 werden somit weiter zusammengedrückt. Je nach Auslegung der Rampe 111 bleiben die Schraubenfedern 107 entweder bis zum Rückführen der Schaltmuffe 105 in die Neutralstellung durch die Schaltkraft vorgespannt oder entspannen sich zumindest teilweise.

Die Schraubenfedern 107 entspannen sich dann teilweise, wenn jede der Kugeln 109 nach der Synchronisation jeweils ein in Figur 13 dargestelltes Ende 111a der Rampe 111 erreicht hat und dieses beim weiteren axialen Verschieben der Schaltmuffe 105 in Richtung eines Gangrades 92 überrollt. Die Kugeln 109 tauchen dann jeweils in eine Mulde 112 ein. Beim Zurückführen der Schaltmuffe 105 in die Neutralstellung nimmt die Schaltmuffe 105 über die in der Mulde 112 an dem Ende 111a anliegenden Kugeln 109 den äußeren Reibring 102 axial bis zu einem axialen Anschlag an der Getriebewelle 94 für den äußeren Reibring 102 mit und löst sich dann nach Überwindung des Endes 111a durch die Kugeln 109 von dem äußeren Reibring 102.

Der axiale Freiraum für die Nabe 97 der Schaltmuffe 105 in Figur 12 ist, ähnlich wie in Figur 8 dargestellt, durch von dem Rand des Durchbruches 104 radial nach außen weggehende Aussparungen 113 an dem äußeren Reibring 102 geschaffen. Die Nabe 97 besteht an ihren beiden Längsseiten aus hervorstehenden Abschnitten 97b, an denen anteilig die Keile 97a ausgebildet sind. Jeder der Abschnitte 97b steht einer der Aussparungen 113 gegenüber und taucht in diese beim axialen Verschieben der Schaltmuffe 105 ein.

Nach dem Angleichen der Drehzahlen der Getriebewelle 94 und eines der Gangräder 92 und 93 greift die Schaltmuffe 105 nach Figur 12 mit einer der Kupplungsverzahnungen 99 in eine der Gegenverzahnungen 91 a ein und verbindet somit die Getriebewelle 94 verdrehfest mit einem der Gangräder 92, 93. Eine nicht dargestellte Schaltgabel überträgt während des vorstehend beschriebenen Vorganges die Schaltkraft zur Schaltmuffe 105 und greift dazu in eine radial nach außen offene Ringnut 114 ein. Die Ringnut 114 ist durch die Mantelflächen der Blechformteile 95 und 96 begrenzt.

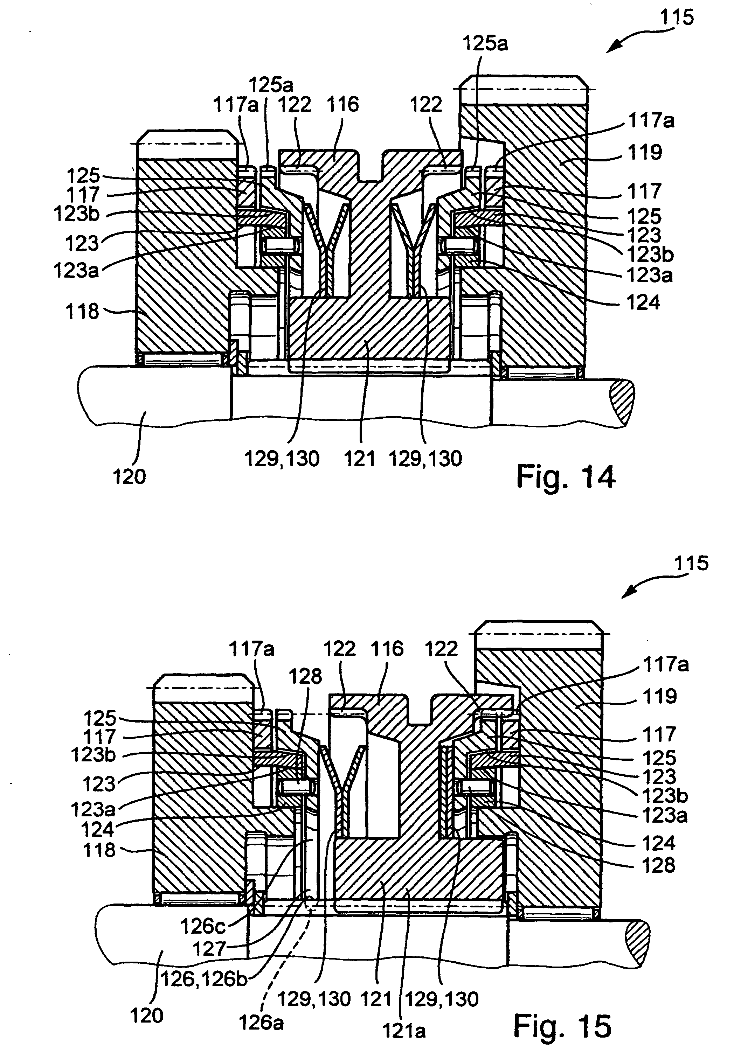

Figur 14 und 15 zeigen ein Ausführungsbeispiel einer Schaltkupplung 115 mit einer doppelten Synchronisation. Die Schaltkupplung 115 weist eine Schaltmuffe 116 sowie zwei Kupplungskörper 117 an Gangrädem 118, 119 auf. Die Gangräder 118, 119 sind jeweils rotierend auf einer Getriebewelle 120 gelagert. Die Schaltmuffe 116 ist zwischen den Gangrädern 118 und 119 angeordnet und sitzt mit einer Nabe 121 verdrehfest sowie in beide Richtungen axial verschiebbar auf der Getriebewelle 120.

Die Schaltmuffe 116 aus Figur 14 und Figur 15 ist außerdem beidseitig mit Kupplungsverzahnungen 122 versehen. Zu den Kupplungsverzahnungen 122 gibt es jeweils eine Gegenverzahnung 117a. Die Gegenverzahnung 117a ist an dem Kupplungskörper 117 ausgebildet.

Die Kupplungskörper 117 der Schaltkupplung 115 nach Figur 14 und Figur 15 sind jeweils mit einem Zwischenring 123 gekoppelt. Der Zwischenring 123 weist jeweils eine innere konische Reibfläche 123a und eine äußere konische Reibfläche 123b auf, die jeweils einem inneren Reibring 124 oder einem äußeren Reibring 125 zugeordnet sind. Die Reibringe 124, 125 und der Zwischenring 123 sind aus Blech gefertigt. Der äußere Reibring 125 ist außen mit einer Sperrverzahnung 125a versehen (Figur 15). Der innere Reibring 124 ist mittels zylindrischer Stifte 128 axial verschiebbar mit dem äußeren Reibring 125 gekoppelt. Der axiale Freiraum für die Nabe 121 der Schaltmuffe 116 in Figur 14 und Figur 15 ist ähnlich wie in Figur 8 dargestellt, durch von dem Rand 126b des Durchbruches 126 radial nach außen weggehende Aussparungen 126c an dem äußeren Reibring 125 geschaffen. Die Nabe 121 besteht an ihren beiden Längsseiten aus hervorstehenden Abschnitten 121 a an denen anteilig die Verzahnung der Nabe ausgebildet ist. Jedem der Abschnitte 121 a steht einer der Aussparungen 126c gegenüber und jeder der Abschnitte 121 a taucht in diese beim axialen Verschieben der Schaltmuffe 116 ein (Figur 15).

Auf der Nabe 121 der Schaltmuffe 116 in Figur 14 und Figur 15 sind beidseitig Federelemente 129 aufgenommen und zentriert. Die Federelemente 129 sind durch in Reihe geschaltete Tellerfeder 130 gebildet.

Die nach Figur 15 in Richtung eines der Gangräder 119 auf der Getriebewelle 120 verschobene Schaltmuffe 116 überträgt die Schaltkraft zuerst auf die Tellerfedem 130 an einer ihrer Seiten und verschiebt mit den Tellerfedern 130 einen der äußeren Reibringe 125 gegen den Zwischenring 123. Die Tellerfeder 130 sitzen mittels der durch die Schaltmuffe 116 übertragenen Schaltkraft vorgespannt zwischen der Schaltmuffe 116 und dem äußeren Reibring 125. Die Reibflächen der Ringe 123, 124 und 125 schieben sich dabei so ineinander, dass die Synchronisation durch die zweite Reibpaarung aus dem Zwischenring 123 und dem inneren Reibring 124 verstärkt wird. Die Kupplungsverzahnung 122 der Schaltmuffe 116 kann erst nach Abschluss der Synchronisation durch die Sperrverzahnung 125a hindurch verschoben werden. Dabei werden die Tellerfedem 130 weiter zusammengedrückt und verbleiben bei bis zum Rückführen der Schaltmuffe 116 in die Neutralstellung durch die Schaltkraft vorgespannt.

Nach dem Angleichen der Drehzahlen der Getriebewelle 120 und eines der Gangräder 119 greift die Schaltmuffe 116, wie in Figur 15 dargestellt, mit einer der Kupplungsverzahnungen 122 in eine der Gegenverzahnung 117a ein und verbindet somit die Getriebewelle 120 verdrehfest mit einem der Gangräder 119.

### Liste der Bezugszeichen

- 1: Schaltkupplung
- 2: Schaltmuffe
- 3: Kupplungskörper
- 3a: Gegenverzahnung
- 4: Kupplungskörper
- 4a: Gegenverzahnung
- 5: Gangrad
- 6: Gangrad
- 7: Getriebewelle
- 7a: Längsachse
- 8: Blechformteil
- 9: Blechformteil
- 10: Nabe
- 10a: Keil
- 11: Teilungsebene
- 12: Schweißverbindung
- 13: Nut
- 14: Kupplungsverzahnung
- 14a: Zahn
- 15: Kupplungsverzahnung
- 15a: Zahn
- 16: Ringnut
- 17: Schaltkupplung
- 18: Schaltmuffe
- 19: Kupplungskörper
- 19a: Gegenverzahnung
- 20: Kupplungskörper
- 20a: Gegenverzahnung
- 21: Gangrad
- 22: Gangrad
- 23: Getriebewelle
- 23a: Längsachse
- 24: Blechformteil
- 25: Blechformteil
- 26: Teilungsebene
- 27: Nabe
- 28: Keil
- 29: Nut
- 30: Kupplungsverzahnung
- 30a: Zahn
- 31: Kupplungsverzahnung
- 31a: Zahn
- 32: Ringnut
- 33: Aufnahme
- 33a: Ausformung
- 33b: Ausformung
- 34: Feder
- 35: Arretierelement
- 36: Rastausnehmung
- 37: Nietverbindung
- 38: Schaltkupplung
- 39: Schaltmuffe
- 40: Kupplungskörper
- 40a: Gegenverzahnung
- 40b: Reibfläche
- 41: Kupplungskörper
- 41 a: Gegenverzahnung
- 41b: Reibfläche
- 42: Gangrad
- 42a: Absatz
- 43: Gangrad
- 43a: Absatz
- 44: Getriebewelle
- 45: Blechformteil
- 46: Blechformteil
- 47: Keil
- 48: Nabe
- 48a: Abschnitt
- 49: Nut
- 50: Kupplungsverzahnung
- 50a: Zahn
- 51: Kupplungsverzahnung
- 51a: Zahn
- 54: Reibring
- 54a: Reibfläche
- 54b: Sperrverzahnung
- 55: Reibring
- 55a: Reibfläche
- 55b: Sperrverzahnung
- 56: Durchbruch
- 56a: Vorsprung
- 57: Durchbruch
- 57a: Vorsprung
- 58: Federelement
- 59: Schraubenfeder
- 60: Ringnut
- 61: Aufnahme
- 61a: Ausformung
- 61b: Ausformung
- 62: Feder
- 63: Arretierelement
- 64: Rastausnehmung
- 65: Rastausnehmung
- 66: Rastausnehmung
- 67: Aussparung
- 68: Aussparung
- 69: Schaltkupplung
- 70: Schaltmuffe
- 71: Kupplungskörper
- 71 a: Gegenverzahnung
- 72: Kupplungskörper
- 72a: Gegenverzahnung
- 73: Gangrad
- 74: Gangrad
- 75: Getriebewelle
- 76: Blechformteil
- 77: Blechformteil
- 78: Nabe
- 78a: Zahn
- 78b: Abschnitt
- 79: Nut
- 80: Kupplungsverzahnung
- 80a: Zahn
- 81: Loch
- 82: Zwischenring
- 82a: innere Reibfläche
- 82b: äußere Reibfläche
- 83: äußerer Reibring
- 83a: innere Reibfläche
- 83b: Sperrverzahnung
- 83c: Haltenase
- 84: innerer Reibring
- 84a: äußere Reibfläche
- 84b: Langloch
- 84c: innere Verzahnung
- 85: Durchbruch
- 85a: Vorsprung
- 86: Ringnut
- 87: Schaltkupplung
- 88: äußerer Reibring
- 88a: Aussparung
- 89: innerer Reibring
- 90: Schaltkupplung
- 91: Kupplungskörper
- 91 a: Gegenverzahnung
- 92: Gangrad
- 93: Gangrad
- 94: Getriebewelle
- 95: Blechformteil
- 96: Blechformteil
- 97: Nabe
- 97a: Keil
- 97b: Abschnitt
- 98: Nut
- 99: Kupplungsverzahnung
- 99a: Zahn
- 100: Zwischenring
- 100a: innere Reibfläche
- 100b: äußere Reibfläche
- 101: innerer Reibring
- 101 a: äußerer Reibfläche
- 102: äußerer Reibring
- 102a: innere Reibfläche
- 102b: Sperrverzahnung
- 103: Durchbruch
- 103a: Vorsprung
- 104: Durchbruch
- 104a: Vorsprung
- 105: Schaltmuffe
- 106: Federelement
- 107: aubenfeder
- 108: Gehäuse
- 109: Kugel
- 110: Loch
- 111: Rampe
- 111a: Ende
- 112: Mulde
- 113: Aussparung
- 114: Ringnut
- 115: Schaltkupplung
- 116: Schaltmuffe
- 117: Kupplungskörper
- 117a: Gegenverzahnung
- 118: Gangrad
- 119: Gangrad
- 120: Getriebewelle
- 121: Nabe
- 121 a: Abschnitt
- 122: Kupplungsverzahnung
- 123: Zwischenring
- 123a: innere Reibfläche
- 123b: äußere Reibfläche
- 124: innerer Reibring
- 125: äußerer Reibring
- 125a: Sperrverzahnung
- 126: Durchbruch
- 126a: Vorsprung
- 126b: Rand
- 126c: Aussparung
- 127: Keilprofil
- 128: Stift
- 129: Federelement
- 130: Tellerfeder

## Patentansprüche

1. Schaltkupplung (38, 69, 87, 90, 115) mit einer Synchronisiereinrichtung bestehend aus zumindest einem auf einer Getriebewelle (44, 75, 94, 120) angeordneten Gangrad (42, 43, 73, 74, 92, 93, 118, 119) und wenigstens einer verdrehfest zu der Getriebewelle (44, 75, 94, 120) angeordneten sowie bei einem Schaltvorgang axial zu der Getriebewelle (44, 75, 94, 120) verschiebbaren Schaltmuffe (39, 70, 105, 116) mit einer Kupplungsverzahnung (50 ,51, 80, 99, 122), wobei die Schaltkupplung (38, 69, 87, 90, 115) weiterhin zumindest einem der Getriebewelle (44, 75, 94, 120) verdrehfest zugeordneten Reibring (54, 55, 83, 84, 88, 89, 101, 102, 124, 125) einschließt und das Gangrad (42, 43, 73, 74, 92, 93, 118, 119) über eine Gegenverzahnung (40a, 41 a, 71 a, 72a, 91 a, 117a) zu der Kupplungsverzahnung (50 ,51, 80, 99, 122) verdrehfest mit der Getriebewelle (44, 75, 94, 120) verbindbar ist und der drehfest zur Getriebewelle (44, 75, 94, 120) angeordnete, die Getriebewelle (44, 75, 94, 120) umschließende, aus Blech geformte Reibring (54, 55, 83, 84, 88, 89, 101, 102, 124, 125) bei einem Schaltvorgang zumindest zeitweise eine Reibpaarung mit einer wenigstens verdrehfest mit dem Gangrad gekoppelten Reibfläche (40b, 41b, 82a, 82b, 100a, 100b, 123a, 123b) bildet, **dadurch gekennzeichnet, dass** der einstückig gestaltete, eine äußere und/oder eine innere Reibfläche aufweisende Reibring (54, 55, 84, 88, 89, 101, 102, 125) mittels einer formschlüssigen Verbindung axial verschiebbar auf der Getriebewelle (44, 75, 94, 120) angeordnet ist und die Schaltmuffe (39, 70, 105, 116) bei dem Schaltvorgang den Reibring (54, 55, 84, 88, 89, 101, 102, 125) außen umschließt.

2. Schaltkupplung nach Anspruch 1, **dadurch gekennzeichnet, dass** der Reibring (54, 55, 84, 88, 89, 101, 102, 125) in seinem Querschnitt betrachtet die Form eines Napfes mit einem bodenseitig eingebrachten axialen Durchbruch (56, 57, 85, 103, 104, 126) aufweist, wobei von dem Rand des Durchbruches (56, 57, 85, 103, 104, 126) aus radial nach innen hervorstehende Vorsprünge (56a, 57a, 85a, 103a, 104a, 126a) in axial verlaufende Nuten (49, 79, 98) der Getriebewelle (44, 75, 94, 120) eingreifen (Figuren 3, 4, 5, 12, 15).

3. Schaltkupplung nach Anspruch 1, **gekennzeichnet durch** eine doppelte Synchronisation, bei der jedem Kupplungskörper (71, 72, 91) ein Zwischenring (82, 100) zugeordnet ist, dem innenseitig und außenseitig jeweils ein Reibring (83, 84; 101, 102) zugeordnet ist (Figur 4).

4. Schaltkupplung nach Anspruch 3, **gekennzeichnet durch** eine radial beabstandete, konische Lage der Reibflächen (84a, 101a) des inneren Reibrings (84, 101) zu der Reibfläche (83a, 102a) des äußeren Reibrings (83, 102), wobei die Reibflächen (84a, 101a, 83a, 102a) mit Reibflächen (82a, 82b; 100a, 100b) des Zwischenrings (82, 100) zusammenwirken (Figur 12).

5. Schaltkupplung nach Anspruch 3, **dadurch gekennzeichnet, dass** der äußere Reibring (83) zumindest eine Haltenase (83c) aufweist, die in der Einbaulage formschlüssig in Langlöcher (84b) des inneren Reibrings (84) eingreifen (Figur 4).

6. Schaltkupplung nach Anspruch 3, **dadurch gekennzeichnet, dass** der innere Reibring (101) und der äußere Reibung (102) jeweils radial nach innen zeigende Vorsprünge (103a, 104a) aufweisen, die in axial verlaufende Nuten (98) der Getriebewelle (94) eingreifen.

## Claims

1. Shift clutch (38, 69, 87, 90, 115), with a synchronizing device consisting of at least one gear wheel (42, 43, 73, 74, 92, 93, 118, 119) arranged on a transmission shaft (44, 75, 94, 120) and of at least one shift sleeve (39, 70, 105, 116) which is arranged fixedly in terms of rotation with respect to the transmission shaft (44, 75, 94, 120) and in the event of a shifting operation is displaceable axially with respect to the transmission shaft (44, 75, 94, 120) and which has a clutch toothing (50, 51, 80, 99, 122), furthermore the shift clutch (38, 69, 87, 90, 115) including at least one friction ring (54, 55, 83, 84, 88, 89, 101, 102, 124, 125) assigned fixedly in terms of rotation to the transmission shaft (44, 75, 94, 120), and the gear wheel (42, 43, 73, 74, 92, 93, 118, 119) being connectable fixedly in terms of rotation to the transmission shaft (44, 75, 94, 120) via a counter-toothing (40a, 41a, 71a, 72a, 91a, 117a) to the clutch toothing (50, 51, 80, 99, 122), and, in the event of a shifting operation, the friction ring (54, 55, 83, 84, 88, 89, 101, 102, 124, 125), which is arranged fixedly in terms of rotation with respect to the transmission shaft (44, 75, 94, 120), surrounds the transmission shaft (44, 75, 94, 120) and is formed from sheet metal, forming, at least temporarily, a frictional pairing with a friction surface (40b, 41b, 82a, 82b, 100a, 100b, 123a, 123b) coupled at least fixedly in terms of rotation to the gear wheel, **characterized in that** the friction ring (54, 55, 84, 88, 89, 101, 102, 125) configured in one piece and having an outer and/or an inner friction surface is arranged axially displaceably on the transmission shaft (44, 75, 94, 120) by means of a positive connection, and, during a shifting operation, the shift sleeve (39, 70, 105, 116) surrounds the friction ring (54, 55, 84, 88, 89, 101, 102, 125) on the outside.

2. Shift clutch according to Claim 1, **characterized in that** the friction ring (54, 55, 84, 88, 89, 101, 102, 125), as seen in its cross section, has the form of a cup with axial perforation (56, 57, 85, 103, 104, 126) introduced on the bottom side, projections (56a, 57a, 85a, 103a, 104a, 126a) which project radially inwards from the edge of the perforation (56, 57, 85, 103, 104, 126) engaging into axially running grooves (49, 79, 98) of the transmission shaft (44, 75, 94, 120) (Figures 3, 4, 5, 12, 15).

3. Shift clutch according to Claim 1, **characterized by** double synchronization, in which each clutch body (71, 72, 91) is assigned an intermediate ring (82, 100) which is assigned a friction ring (83, 84; 101, 102) on the inside and on the outside in each case (Figure 4).

4. Shift clutch according to Claim 3, **characterized by** a radially spaced-apart conical position of the friction surfaces (84a, 101a) of the inner friction ring (84, 101) with respect to the friction surface (83a, 102a) of the outer friction ring (83, 102), the friction surfaces (84a, 101a, 83a, 102a) cooperating with friction surfaces (82a, 82b; 100a, 100b) of the intermediate ring (82, 100) (Figure 12).

5. Shift clutch according to Claim 3, **characterized in that** the outer friction ring (83) has at least one holding nose (83c), the said holding noses engaging positively into long holes (84b) of the inner friction ring (84) in the installation position (Figure 4).

6. Shift clutch according to Claim 3, **characterized in that** the inner friction ring (101) and the outer friction ring (102) have in each case radially inward-pointing projections (103a, 104a) which engage into axially running grooves (98) of the transmission shaft (94).

## Revendications

1. Embrayage (38, 69, 87, 90, 115) avec un synchroniseur se composant d'au moins un pignon de vitesse (42, 43, 73, 74, 92, 93, 118, 119) disposé sur un arbre de transmission (44, 75, 94, 120) et d'au moins un manchon coulissant (39, 70, 105, 116) disposé de manière solidaire en rotation par rapport à l'arbre de transmission (44, 75, 94, 120) mais pouvant coulisser axialement par rapport à l'arbre de transmission (44, 75, 94, 120) grâce à une denture d'accouplement (50, 51, 80, 99, 122), l'embrayage (38, 69, 87, 90, 115) comprenant également au moins une bague de friction (54, 55, 83, 84, 88, 89, 101, 102, 124, 125) associée de manière solidaire en rotation à l'arbre de transmission (44, 75, 94, 120) et le pignon de vitesse (42, 43, 73, 74, 92, 93, 118, 119) pouvant être rendu solidaire en rotation de l'arbre de transmission (44, 75, 94, 120) via une denture (40a, 41a, 71a, 72a, 91a, 117a) opposée à la denture d'accouplement (50, 51, 80, 99, 122) et la bague de friction (54, 55, 83, 84, 88, 89, 101, 102, 124, 125) réalisée en tôle et disposée de manière solidaire en rotation par rapport à l'arbre de transmission (44, 75, 94, 120), entourant l'arbre de transmission (44, 75, 94, 120), forme, lors d'un passage de vitesses, au moins temporairement un couple de friction avec une surface de friction (40b, 41b, 82a, 82b, 100a, 100b, 123a, 123b) accouplée au moins de manière solidaire en rotation avec le pignon de vitesse, **caractérisé en ce que** la bague de friction (54, 55, 84, 88, 89, 101, 102, 125) réalisé en une seule pièce et présentant une surface de friction extérieure et/ou intérieure est disposée de manière à pouvoir coulisser axialement, grâce à un assemblage par liaison par forme, sur l'arbre de transmission (44, 75, 94, 120) et **en ce que** le manchon coulissant (39, 70, 105, 116) entoure l'extérieur de la bague de friction (54, 55, 84, 88, 89, 101, 102, 125) lors du passage de vitesse.

2. Embrayage selon la revendication 1, **caractérisé en ce que** la bague de friction (54, 55, 84, 88, 89, 101, 102, 125), considérée dans sa section transversale, présente la forme d'une cuvette avec un percement axial (56, 57, 85, 103, 104, 126) réalisé côté fond, où des saillies (56a, 57a, 85a, 103a, 104a, 126a) débordant du bord du percement (56, 57, 85, 103, 104, 126) radialement vers l'intérieur s'engagent dans des rainures (49, 79, 98) s'étendant axialement sur l'arbre de transmission (44, 75, 94, 120) (Fig. 3, 4, 5, 12, 15).

3. Embrayage selon la revendication 1, **caractérisé par** une double synchronisation dans laquelle une bague intermédiaire (82, 100) est associée à chaque corps de couplage (71, 72, 91) auquel une bague de friction (83, 84 ; 101, 102) est à chaque fois associée du côté intérieur et du côté extérieur (Fig. 4).

4. Embrayage selon la revendication 3, **caractérisé par** une position conique de la surface de friction (84a, 101a) de la bague de friction extérieure (84, 101), écartée radialement par rapport à la surface de friction (83a, 102a) de la bague de friction extérieure (83, 102), les surfaces de friction (84a, 101a, 83a, 102a) coopérant avec les surfaces de friction (82a, 82b ; 100a, 100b) de la bague intermédiaire (82, 100) (Fig. 12).

5. Embrayage selon la revendication 3, **caractérisé en ce que** la bague de friction extérieure (83) présente au moins un ergot de maintien (83c) qui, en position de montage, s'engage, par liaison par forme, dans des trous oblongs (84b) de la bague de friction intérieure (84) (Fig. 4).

6. Embrayage selon la revendication 3, **caractérisé en ce que** la bague de friction intérieure (101) et la bague de friction extérieure (102) présentent respectivement des saillies (103a, 104a) tournées radialement vers l'intérieur, lesquelles s'engagent dans les rainures (98) s'étendant axialement sur l'arbre de transmission (94).
